# EUROPÄISCHE PATENTSCHRIFT

(11) **EP 2 712 945 B1**
(45) Veröffentlichungstag und Bekanntmachung des Hinweises auf die Patenterteilung: **14.03.2018**
(21) Anmeldenummer: 12186581.0
(22) Anmeldetag: 28.09.2012
(51) Int. Cl.: C25B 1/04, C25B 9/00, C25B 15/00

(54) **Elektrolyseeinrichtung**
Electrolysis device
Dispositif d'électrolyse

(43) Veröffentlichungstag der Anmeldung: 02.04.2014
(73) Patentinhaber: H-TEC Systems GmbH, 23558 Lübeck (DE)
(72) Erfinder: Mantai, Nils, 23560 Lübeck (DE); Würfel, Claus, 23558 Lübeck (DE); Wilken, Dennis, 23847 Kastorf (DE); Küter, Uwe, 23560 Lübeck (DE); Höller, Stefan, 23552 Lübeck (DE)
(74) Vertreter: Daub, Thomas

(56) Entgegenhaltungen:
- EP-A1- 2 394 953
- US-A1- 2005 121 315
- US-A1- 2011 240 486
- US-A1- 2012 222 954

## Beschreibung

Die Erfindung betrifft eine Elektrolyseeinrichtung gemäß dem Oberbegriff des Anspruchs 1.

Es zählt zum Stand der Technik, Elektrolyseeinrichtungen zur Erzeugung von Wasserstoff und/oder Sauerstoff einzusetzen. Dabei wird in der Regel destilliertes Wasser in einem Elektrolyseur durch elektrischen Strom in Wasserstoff und Sauerstoff zersetzt. Der bei der Elektrolyse hergestellte Wasserstoff ist jedoch stets mit etwas Sauerstoff verunreinigt. Das gleiche gilt für den Sauerstoff, welcher stets noch einen geringen Wasserstoffanteil etwa in der Größenordnung um 2 % H2 enthält. Um eine Explosion zu vermeiden, werden diese Gemische beispielsweise mittels kalibrierungspflichtiger Sensoren, welche zur Detektion von gefährlichen Gaskonzentrationen eingesetzt werden, überwacht, so dass bei Erreichen der unteren Explosionsgrenze die Elektrolyseeinrichtung rechtzeitig abgeschaltet werden kann. Nachteilig beim Einsatz der oben genannten Sensoren ist der hohe Aufwand und die damit verbundenen hohen Kosten aufgrund häufiger sicherheitstechnischer Überprüfungen.

Weiterhin zählt es zum Stand der Technik, die Elektrolyseeinrichtung mit einem hohen Luftstrom zur Verhinderung der Bildung einer explosionsfähigen Atmosphäre zu durchströmen. Da jedoch zur Erzielung dieses hohen Luftstroms relativ geräuschintensive Lüftungseinrichtungen eingesetzt werden müssen, führt dies zu einem hohen und unerwünschten Lärmpegel. Die Druckschrift US 2011/0240486 A1 beschreibt ein Elektrolysesystem mit einem Gehäuse, welches mittels zweier Lüfter belüftet werden kann.

Ein weiteres Problem bei den aus dem Stand der Technik bekannten Lösungen im Hinblick auf den Explosionsschutz bei Elektrolyseeinrichtungen ist, dass der Elektrolyseur in einem frostfreien Raum mit einer hohen Luftumsatzrate aufgestellt werden muss. Insbesondere bei tiefen Temperaturen im Winter ist dann die Beheizung dieses Raumes problematisch.
Vor diesem Hintergrund liegt der Erfindung die Aufgabe zugrunde, eine Elektrolyseeinrichtung bereitzustellen, welche einen Explosionsschutz bietet, welcher die oben genannten Probleme des Standes der Technik vermeidet.
Diese Aufgabe wird gemäß der Erfindung wird durch eine Elektrolyseeinrichtung mit den in Anspruch angegebenen Merkmalen 1 gelöst. Vorteilhafte Ausgestaltungen der Erfindung sind in den Unteransprüchen, der nachfolgenden Beschreibung und der Zeichnung angegeben.
Erfindungsgemäß wird eine Elektrolyseeinrichtung mit einem Elektrolyseur zur elektrolytischen Zerlegung von Wasser in Wasserstoff und Sauerstoff und einer Anzahl von wasserstoffführenden Bauteilen bereitgestellt, wobei die Elektrolyseeinrichtung einen unter Unterdruck stehenden Raum umfasst, in welchem die Anzahl von wasserstoffführenden Bauteilen angeordnet ist. Indem also alle wasserstoffführenden Bauteile innerhalb eines Raumes angeordnet sind, der unter Unterdruck steht, kann auf eine aufwändige Gasüberwachung mittels kalibrierpflichtiger Sensoren verzichtet werden, denn der Unterdruck kann mittels eines kalibrierfreien Druckwächters überwacht werden. Die erfindungsgemäße Explosionsschutzkonfiguration ermöglicht somit auch einen uneingeschränkten Betrieb der Elektrolyseeinrichtung in Wohngebäuden. Weder ist hierzu eine hohe Luftwechselrate noch eine spezielle Umgebungsatmosphäre erforderlich. Auch außerhalb von Gebäuden kann der Betrieb der Elektrolyseeinrichtung vereinfacht werden, da eine Beheizung im Winter aufgrund der erfindungsgemäßen Konfiguration leichter und mit wesentlich geringerem Energieaufwand realisierbar ist.
Gemäß einer bevorzugten Ausführungsform umfassen die wasserstoffführenden Bauteile einen Elektrolysestack, zumindest ein Ventil, einen Wasserabscheider und/oder eine Trocknungseinrichtung.
Gemäß einer weiteren bevorzugten Ausführungsform weist die Elektrolyseeinrichtung eine Anzahl von sauerstoffführenden Bauteilen auf, welche ebenfalls in dem unter Unterdruck stehenden Raum angeordnet sind. Dies verbessert die Explosionsschutzmaßnahme zusätzlich.
Gemäß noch einer weiteren bevorzugten Ausführungsform ist ein Druckwächter, insbesondere ein kalibrierfreier Druckwächter, zum Überwachen des Unterdrucks in dem unter Unterdruck stehenden Raum vorgesehen. Der Einsatz eines kalibrierfreien Druckwächters ist im Gegensatz zu kalibrierpflichtigen Sensoren mit geringerem Überwachungsaufwand und somit mit geringeren Betriebskosten verbunden.

Gemäß noch einer weiteren bevorzugten Ausführungsform sind die Anzahl von wasserstoffführenden Bauteilen und die Anzahl von sauerstoffführenden Bauteilen abgedichtet, insbesondere gasdicht, was den Explosionsschutz weiter verbessert.

Vorzugsweise sind die wasserstoffführenden Bauteile und die sauerstoffführenden Bauteile durch gasführende Leitungen verbunden, welche ebenfalls in dem unter Unterdruck stehenden Raum angeordnet sind. Auch hierdurch kann noch eine weitere Verbesserung des Explosionsschutzes erreicht werden.

Ein weiterer Vorteil kann dadurch erzielt werden, wenn die Rohre der gasführenden Leitungen doppelwandig, insbesondere mit einem evakuierten Zwischenraum zwischen den beiden Wandungen, ausgeführt sind.

Zweckmäßigerweise ist gemäß einer Weiterbildung der Erfindung der Zwischenraum zwischen den beiden Wandungen der Rohre der gasführenden Leitungen mit derselben Vakuumpumpe leitungsverbunden, mit der auch der unter Unterdruck stehende Raum evakuiert wird. Dies hat den Vorteil, dass nur eine Vakuumpumpe benötigt wird.

Weiterhin ist es vorteilhaft, wenn der unter Unterdruck stehende Raum ein Druckbehälter aus Edelstahl, Kunststoff oder Gummi ist. Besonders vorteilhaft sind Gummimatten, welche sich beim Erzeugen des Unterdrucks an die Komponenten anlegen.

Die Erfindung ist nachfolgend anhand eines in der Zeichnung dargestellten Ausführungsbeispiels näher erläutert. Es zeigt:

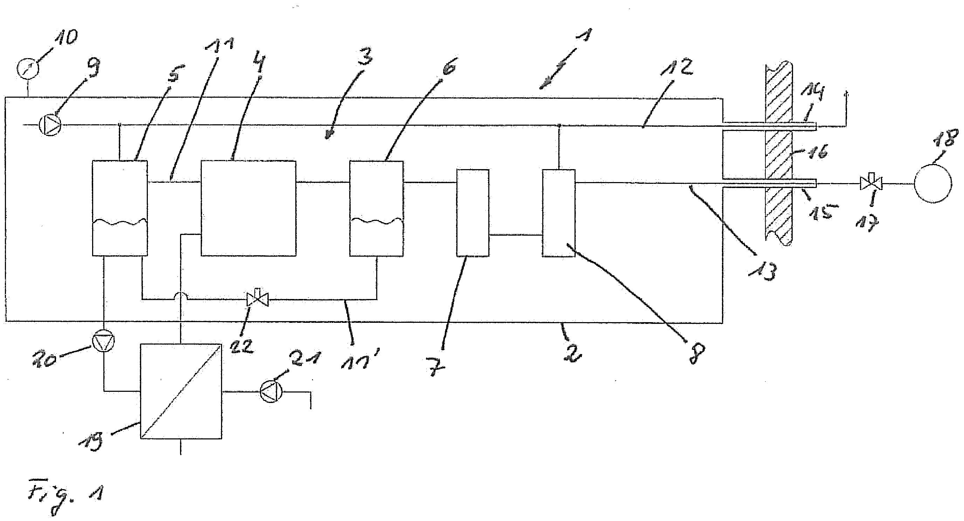

- Fig. 1: eine schematische Darstellung einer Elektrolyseeinrichtung gemäß einer Ausführungsform der Erfindung.

Figur 1 ist eine schematische Darstellung einer Elektrolyseeinrichtung 1 zur elektrolytischen Zerlegung von Wasser in Wasserstoff und Sauerstoff. Wie erkennbar ist, sind alle wasser- und sauerstoffführenden Komponenten eines Elektrolyseurs 3 in einem unter Unterdruck stehenden Raum 2 angeordnet, um einen effektiven Explosionsschutz vorzusehen. Insbesondere sind bei der hier dargestellten Ausführungsform ein Elektrolysestack 4, ein sauerstoffseitiger Gas-/Wassertrenner 5, ein wasserstoffseitiger Gas-/Wassertrenner 6, eine erste Trocknungseinrichtung 7 und eine zweite Trocknungseinrichtung 8 in dem unter Unterdruck stehenden Raum 2 untergebracht. Weiterhin ist eine Vakuumpumpe 9 zum Erzeugen des Unterdrucks in dem Raum 2 angeordnet, welcher von einem kalibrierfreien Druckwächter 10 überwacht wird.

Die oben aufgeführten wasserstoffführenden Bauteile sind über gasführende Leitungen 11 miteinander verbunden, welche ebenfalls in dem unter Unterdruck stehenden Raum 2 angeordnet sind. In einer den Elektrolysestack 4 mit dem Wasserstoff-seifigen Gas-/Wassertrenner 6 verbindenden Leitung 11' ist ein Rückspülventil 22 vorgesehen.

Ebenfalls in diesem Raum 2 vorgesehen sind darüber hinaus eine Abgasleitung 12 und eine Produktgasleitung 13, welche an jeweiligen Ausgängen 14, 15 aus dem unter Unterdruck stehenden Raum 2 und aus einem Gebäude bzw. einer Gebäudewand 16 hinausgeleitet werden, wobei der mit der Produktgasleitung 13 verbundene Ausgang 15 über ein externes Ventil 17 das aus der Elektrolyse gewonnene Produktgas in einen Gastank 18 leitet.

Der unter Unterdruck stehende Raum 2 ist gasdicht ausgebildet, und die in dem unter Unterdruck stehenden Raum 2 angeordneten Leitungen, hier die gasführenden Leitungen 11, sowie die Produktgasleitung 13 und die Abgasleitung 12 sind aus doppelwandigen Rohren gebildet, wobei der zwischen den beiden Rohrwänden vorhandene Zwischenraum ebenfalls evakuiert ist.

Außerhalb des Raums 2 ist weiterhin ein Wärmetauscher 19 vorgesehen, welcher über eine Zirkulationswasserpumpe 20 mit dem sauerstoffseitigen Gas-/Wassertrenner 5 verbunden ist, um Kühlwasser, welches über eine Kühlwasserpumpe 21 zugeführt wird, dem Elektrolysestack 4 zuzuführen.

Durch die Elektrolyseeinrichtung 1 wird somit eine nahezu geräuschlose, preiswerte und mit handelsüblichen Komponenten aufgebaute Explosionsschutzmaßnahme geschaffen.

### Bezugszeichenliste

- 1: Elektrolyseeinrichtung
- 2: unter Unterdruck stehender Raum
- 3: Elektrolyseur
- 4: Elektrolysestack
- 5: Sauerstoffseitiger Gas-/Wassertrenner
- 6: Wasserstoffseitiger Gas-/Wassertrenner
- 7: erste Trocknungseinrichtung
- 8: zweite Trocknungseinrichtung
- 9: Vakuumpumpe
- 10: Druckwächter
- 11, 11': gasführende Leitungen
- 12: Abgasleitung
- 13: Produktgasleitung
- 14: Ausgang
- 15: Ausgang
- 16: Gebäudewand
- 17: externes Ventil
- 18: Gastank
- 19: Wärmetauscher
- 20: Zirkulationswasserpumpe
- 21: Kühlwasserpumpe
- 22: Rückspülventil

## Patentansprüche

1. Elektrolyseeinrichtung (1) mit einem Elektrolyseur (3) zur elektrolytischen Zerlegung von Wasser in Wasserstoff und Sauerstoff und einer Anzahl von wasserstoffführenden Bauteilen, wobei die Elektrolyseeinrichtung (1) einen unter Unterdruck stehenden Raum (2) umfasst, in welchem die Anzahl von wasserstoffführenden Bauteilen angeordnet ist, **dadurch gekennzeichnet, dass** der unter Unterdruck stehende Raum (2) gasdicht ist und eine Vakuumpumpe (9) zum Erzeugen des Unterdrucks in dem unter Unterdruck stehenden Raum (2) vorgesehen ist.

2. Elektrolyseeinrichtung (1) gemäß Anspruch 1, **dadurch gekennzeichnet, dass** die wasserstoffführenden Bauteile einen Elektrolysestack (4), zumindest ein Ventil (22), zumindest einen Gas-/Wassertrenner (6) und/oder eine Trocknungseinrichtung (7, 8) umfassen.

3. Elektrolyseeinrichtung (1) gemäß Anspruch 1 oder 2, **dadurch gekennzeichnet, dass** die Elektrolyseeinrichtung (1) eine Anzahl von sauerstoffführenden Bauteilen (2) aufweist, welche ebenfalls in dem unter Unterdruck stehenden Raum (2) angeordnet sind.

4. Elektrolyseeinrichtung (1) gemäß einem der Ansprüche 1 bis 3, **dadurch gekennzeichnet, dass** ein Druckwächter (10), insbesondere ein kalibrierfreier Druckwächter, zum Überwachen des Unterdrucks in dem unter Unterdruck stehenden Raum (2) vorgesehen ist.

5. Elektrolyseeinrichtung (1) gemäß einem der Ansprüche 3 bis 4, **dadurch gekennzeichnet, dass** die Anzahl von wasserstoffführenden Bauteilen und die Anzahl von sauerstoffführenden Bauteilen abgedichtet, insbesondere gasdicht sind.

6. Elektrolyseeinrichtung (1) gemäß einem der Ansprüche 3 bis 5, **dadurch gekennzeichnet, dass** die wasserstoffführenden Bauteile und die sauerstoffführenden Bauteile durch gasführende Leitungen (11, 11') verbunden sind, welche ebenfalls in dem unter Unterdruck stehenden Raum (2) angeordnet sind.

7. Elektrolyseeinrichtung (1) gemäß Anspruch 6, **dadurch gekennzeichnet, dass** die Rohre der gasführenden Leitungen (11) doppelwandig, insbesondere mit einem evakuierten Zwischenraum zwischen den beiden Wandungen, ausgeführt sind.

8. Elektrolyseeinrichtung (1) nach Anspruch 7, **dadurch gekennzeichnet, dass** der Zwischenraum zwischen den beiden Wandungen der Rohre der gasführenden Leitungen (11) mit der Vakuumpumpe (9) zum Erzeugen des Unterdrucks in dem unter Unterdruck stehenden Raum (2) leitungsverbunden ist.

9. Elektrolyseeinrichtung (1) nach einem der Ansprüche 1 bis 8, **dadurch gekennzeichnet, dass** der unter Unterdruck stehende Raum (2) ein Druckbehälter aus Edelstahl, Kunststoff oder Gummi ist.

## Claims

1. Electrolysis device (1) with an electrolyser (3) for electrolytically separating water into hydrogen and oxygen and with a plurality of hydrogen-conducting structural components, wherein the electrolysis device (1) comprises a space (2) which is under underpressure and in which the plurality of hydrogen-conducting structural components is arranged, **characterised in that** the space (2) which is under underpressure is gas-tight and a vacuum pump (2) is configured to generate the underpressure in the space (2) which is under underpressure.

2. Electrolysis device (1) according to claim 1, **characterised in that** the hydrogen-conducting structural components comprise an electrolysis stack (4), at least one valve (22), at least one gas-water separator (6) and/or a drying apparatus (7, 8).

3. Electrolysis device (1) according to one of claims 1 or 2, **characterised in that** the electrolysis device (1) comprises a plurality of oxygen-conducting structural components, which are also arranged in the space (2) which is under underpressure.

4. Electrolysis device (1) according to one of claims 1 to 3, **characterised in that** a pressure monitor (10), in particular a calibration-free pressure monitor (10), is configured for monitoring the underpressure in the space (2) which is under underpressure.

5. Electrolysis device (1) according to one of claims 3 or 4, **characterised in that** the plurality of hydrogen-conducting structural components and the plurality of oxygen-conducting structural components are sealed off, in particular gas-tight.

6. Electrolysis device (1) according to one of claims 3 to 5, **characterised in that** the hydrogen-conducting structural components and the oxygen-conducting structural components are connected by gas-conducting lines (11, 11'), which are also arranged in the space (2) which is under underpressure.

7. Electrolysis device (1) according to claim 6, **characterised in that** the pipes of the gas-conducting lines (11) are implemented two-walled, in particular with an evacuated interstice between the two walls.

8. Electrolysis device (1) according to claim 7, **characterised in that** the interstice between the two walls of the pipes of the gas-conducting lines (11) is conductively connected to the vacuum pump (9) for generating the underpressure in the space (2) which is under underpressure.

9. Electrolysis device (1) according to one of claims 1 to 8, **characterised in that** the space (2) which is under underpressure is a pressure container made of stainless steel, synthetics or rubber.

## Revendications

1. Dispositif d'électrolyse (1) avec un électrolyseur (3) pour une dissociation électrolytique de l'eau en hydrogène et oxygène et avec un nombre des composants structurels conduisant d'hydrogène, le dispositif d'électrolyse (1) comprenant un espace (2) étant sous dépression, dans lequel est disposé le nombre des composants structurels conduisant d'hydrogène, **caractérisé en ce que** l'espace (2) étant sous dépression est étanche au gaz et une pompe à vide (9) est prévue à générer la dépression dans l'espace (2) étant sous dépression.

2. Dispositif d'électrolyse (1) selon la revendication 1, **caractérisé en ce que** les composants structurels conduisant d'hydrogène comprennent un pile d'électrolyse (4), au moins une vanne (22), au moins un séparateur gaz-eau (6) et/ou un dispositif séchant (7, 8).

3. Dispositif d'électrolyse (1) selon l'une quelconque des revendications 1 ou 2, **caractérisé en ce que** le dispositif d'électrolyse (1) comporte un nombre des composants structurels (2) conduisant de l'oxygène, lesquels sont aussi disposés dans l'espace (2) étant sous dépression.

4. Dispositif d'électrolyse (1) selon l'une quelconque des revendications 1 à 3, **caractérisé en ce qu'**un moniteur de pression (10), notamment un moniteur de pression libre de calibration, est prévu à surveiller la dépression dans l'espace (2) étant sous dépression.

5. Dispositif d'électrolyse (1) selon l'une quelconque des revendications 3 ou 4, **caractérisé en ce que** le nombre des composants structurels conduisant d'hydrogène et le nombre des composants structurels conduisant de l'oxygène sont étanches, notamment étanches au gaz.

6. Dispositif d'électrolyse (1) selon l'une quelconque des revendications 3 à 5, **caractérisé en ce que** les composants structurels conduisant d'hydrogène et les composants structurels conduisant de l'oxygène sont raccordés par des conduites conduisant de gaz (11, 11'), lesquels sont aussi disposées dans l'espace (2) étant sous dépression.

7. Dispositif d'électrolyse (1) selon la revendication 6, **caractérisé en ce que** les tubes des conduites conduisant de gaz (11) sont implémentés à double paroi, notamment avec un interstice évacué entre les deux parois.

8. Dispositif d'électrolyse (1) selon la revendication 7, **caractérisé en ce que** l'interstice entre les deux parois des tubes des conduites conduisant de gaz (11) est raccordé de manière conductrice à la pompe à vide (9) pour générer la dépression dans l'espace (2) étant sous dépression.

9. Dispositif d'électrolyse (1) selon l'une quelconque des revendications 1 à 8, **caractérisé en ce que** l'espace (2) étant sous dépression est un récipient à pression d'acier inoxydable, d'un matériau synthétique ou de caoutchouc.
